# EUROPEAN PATENT APPLICATION

(11) **EP 3 862 562 A1**
(43) Date of publication of application: **11.08.2021**
(21) Application number: 21155557.8
(22) Date of filing: 05.02.2021
(51) Int. Cl.: F03D 7/04

(54) **SYSTEM AND METHOD FOR OPTIMIZING WAKE MANAGEMENT IN WIND FARMS**

(30) Priority: 06.02.2020 US 202016783249
(71) Applicant: General Electric Company, Schenectady, NY 12345 (US)
(72) Inventor: Fu, Xu, Niskayuna, NY 12309 (US); Landa, Bernard P., Schenectady, NY 12345 (US); Immer, Christopher Darby, Niskayuna, NY 12309 (US); Shartzer, Samuel Bryan, Greenville, SC 29615 (US)
(74) Representative: Zimmermann & Partner Patentanwälte mbB

(57) **Abstract**

A method for optimizing wake management in a wind farm includes receiving, via one or more position localization sensors, position data from at least one nacelle of wind turbines in the wind farm. The method also includes determining angle of the nacelle(s) of the wind turbines with respect to true north based on the position data. Moreover, the method includes determining a wind direction at the nacelle(s) of the wind turbines. As such, the method includes generating a wake estimation model of the wind farm in real-time using the wind direction and the angle of the nacelle(s). In addition, the method includes running the wake estimation model to determine one or more optimal operating parameters for the wind turbines that maximize energy production of the wind turbine. Thus, the method includes operating the wind farm using the optimal operating parameter(s) so as to optimize wake management of the wind farm.

## Description

### FIELD

The present disclosure relates generally to wind farms, and more specifically, to systems and methods for optimizing wake management in wind farms using real-time kinematic (RTK) sensors and digital twin technology.

### BACKGROUND

Wind power is considered one of the cleanest, most environmentally friendly energy sources presently available, and wind turbines have gained increased attention in this regard. A modern wind turbine typically includes a tower, generator, gearbox, nacelle, and one or more rotor blades. The rotor blades capture kinetic energy from wind using known foil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid. Such configurations may also include power converters that are used to convert a frequency of generated electric power to a frequency substantially similar to a utility grid frequency.

A plurality of wind turbines is commonly used in conjunction with one another to generate electricity and are commonly referred to as a wind farm. Wind turbines in a wind farm typically include their own meteorological sensors that perform, for example, temperature, wind speed, wind direction, barometric pressure, and/or air density measurements. In addition, a separate meteorological mast or tower ("met mast") having higher quality meteorological instruments that can provide more accurate measurements at one point in the farm is commonly provided.

In conventional wind farms, individual wind turbines are not aware of the actual direction in which their nacelles are facing (i.e. the angle of the nacelle with respect to true north). Rather, individual wind turbines are generally only aware of the error between the angle of their nacelles with respect to true north and the incoming wind direction, which is acquired by the meteorological sensors (e.g. such as an anemometer) on the individual nacelles. Without knowing the direction that each nacelle is facing, wake management of the overall wind farm is not as accurate. As such, certain wind turbines within a wind farm may also employ a compass and/or an absolute encoder. Such improvements, however, have the disadvantage of requiring calibration and experience accuracy loss after a certain time.

Thus, systems and methods for optimizing wake management in wind farms that address the aforementioned issued would be welcomed in the art. Accordingly, the present disclosure is directed to systems and methods for optimizing wake management in wind farms using real-time kinematic (RTK) sensors and digital twin technology.

### BRIEF DESCRIPTION

Aspects and advantages of the invention will be set forth in part in the following description, or may be obvious from the description, or may be learned through practice of the invention.

In one aspect, the present disclosure is directed to a method for optimizing wake management in a wind farm having a plurality of wind turbines. The method includes receiving, via one or more position localization sensors, position data from at least one nacelle of the plurality of wind turbines. Further, the method includes determining, via a farm-level controller, an angle of the at least one nacelle of the plurality of wind turbines with respect to true north based on the position data. Moreover, the method includes determining, via the farm-level controller, a wind direction at the at least one nacelle of the plurality of wind turbines. As such, the method includes generating, via the farm-level controller, a wake estimation model of the wind farm in real-time using the wind direction and the angle of the at least one nacelle. In addition, the method includes running, via the farm-level controller, the wake estimation model of the wind farm to determine one or more optimal operating, via the farm-level controller, parameters for the plurality of wind turbines of the wind farm that maximize energy production of the wind turbine. Thus, the method includes operating the wind farm using the one or more optimal operating parameters so as to optimize wake management of the wind farm.

In an embodiment, the position localization sensor(s) may include, for example, one or more real-time kinematic (RTK) sensors, one or more inertial navigation system (INS) sensors, one or more global positioning system (GPS) sensors, or combinations thereof. Thus, in an embodiment, receiving the position data from at least one nacelle of the plurality of wind turbines may include receiving three-dimensional or two-dimensional position data from the one or more RTK sensors or the one or more GPS sensors and receiving three-dimensional or two-dimensional acceleration data from the one or more INS sensors. Further, in an embodiment, when the one or more INS sensors faults, the method may include disabling receiving of the acceleration data from the one or more INS sensors. In addition, when the one or more INS sensors faults, the method may include maintaining operation of at least one Kalman filter communicatively coupled with the model to output one or more acceleration signals to enable fault intolerant control of tower damping of one or more of the plurality of wind turbines.

Further, in an embodiment, the method may include installing the one or more position localization sensors locally onto each of the plurality of wind turbines in the wind farm. In such embodiments, the position localization sensor(s) are configured to communicate with the farm-level controller directly using an existing network of the wind farm or a separate wireless radio frequency base station or communication system.

In another embodiment, determining the angle of the nacelle of the plurality of wind turbines with respect to true north based on the position data may include determining an angle of each nacelle of each wind turbine in the plurality of wind turbines with respect to true north based on the position data.

In further embodiments, determining the wind direction at the nacelle(s) of the plurality of wind turbines may include receiving one or more measurement signals from a wind sensor of the nacelle(s) and calculating the wind direction at the nacelle(s) using the one or more measurement signals. In an embodiment, the wind sensor may be an anemometer mounted to the nacelle(s) or a met mast.

In additional embodiments, the optimal operating parameter(s) may include one or more yaw angles for one or more of the plurality of wind turbines. In such embodiments, operating the wind farm using the optimal operating parameter(s) may include adjusting, via one or more turbine controllers, the one or more yaw angles for one or more of the plurality of wind turbines.

In particular embodiments, the wake estimation model of the wind farm may be a digital twin of the wind farm. In yet another embodiment, the method may include running the wake estimation model of the wind farm online.

In another aspect, the present disclosure is directed to a system for optimizing wake management in a wind farm having a plurality of wind turbines. The system includes one or more position localization sensors for generating position data from at least one nacelle of the plurality of wind turbines and a controller communicatively coupled to the position localization sensor(s). The controller is configured to perform a plurality of operations, including but not limited to determining an angle of the nacelle(s) of the plurality of wind turbines with respect to true north based on the position data, determining a wind direction at the nacelle(s) of the plurality of wind turbines, generating a wake estimation model of the wind farm in real-time using the wind direction and the angle of the nacelle(s) with respect to true north, running the wake estimation model of the wind farm to determine one or more optimal operating parameters for the plurality of wind turbines of the wind farm that maximize energy production of the wind turbine, and operating the wind farm using the optimal operating parameter(s) so as to optimize wake management of the wind farm. It should be understood that the system may further include any of the additional features as described herein.

In yet another aspect, the present disclosure is directed to a wind farm. The wind farm includes a plurality of wind turbines. Each wind turbine includes a turbine-level controller, a tower, a nacelle mounted atop the tower, a rotor having rotatable hub with at least one rotor blade mounted thereto, and one or more position localization sensors for generating position data relating to the nacelle. The wind farm also includes a farm-level controller communicatively coupled to each of the turbine-level controllers. The farm-level controller is configured to perform a plurality of operations, including but not limited to determining an angle of each of the nacelles of each wind turbine of the plurality of wind turbines with respect to true north based on the position data, determining a wind direction at each of the nacelles of each wind turbine of the plurality of wind turbines, generating a wake estimation model of the wind farm in real-time using the wind directions and the angles of the nacelles of each wind turbine of the plurality of wind turbines with respect to true north, running the wake estimation model of the wind farm to determine one or more optimal operating parameters for the plurality of wind turbines of the wind farm that maximize energy production of the wind turbine, and operating the wind farm using the optimal operating parameter(s) so as to optimize wake management of the wind farm. It should be understood that the wind farm may further include any of the additional features as described herein.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a wind turbine according to the present disclosure;
FIG. 2 illustrates a schematic view of one embodiment of a controller for use with the wind turbine shown in FIG. 1;
FIG. 3 illustrates a schematic view of one embodiment of a wind farm according to the present disclosure;
FIG. 4 illustrates a perspective view of another embodiment of a wind farm according to the present disclosure, particularly illustrating a plurality of wind turbines in the wind farm facing different directions;
FIG. 5 illustrates a flow diagram of a method for optimizing wake management in a wind farm having a plurality of wind turbines according to the present disclosure; and
FIG. 6 illustrates a block diagram of one embodiment of various components of a digital wind farm according to the present disclosure.

The figures are not necessarily drawn to scale and elements of similar structures or functions are generally represented by like reference numerals for illustrative purposes throughout the figures. The figures are only intended to facilitate the description of the various embodiments described herein. The figures do not describe every aspect of the teachings disclosed herein and do not limit the scope of the claims.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

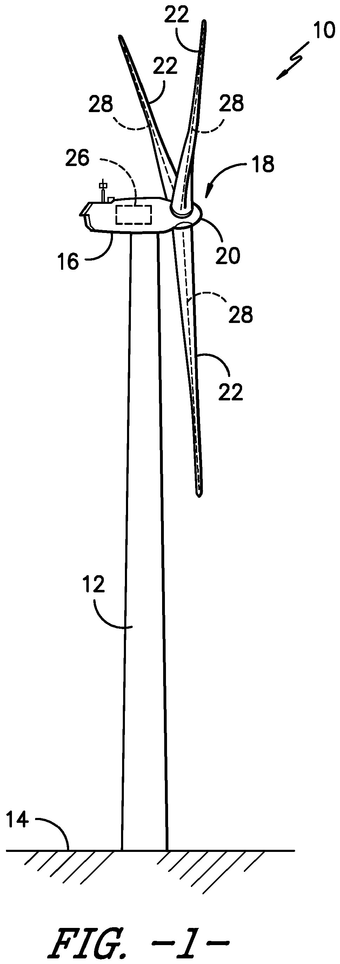

Referring now to the drawings, FIG. 1 illustrates a perspective view of one embodiment of a wind turbine 10 configured to implement the control technology according to the present disclosure. As shown, the wind turbine 10 generally includes a tower 12 extending from a support surface 14, a nacelle 16 mounted on the tower 12, and a rotor 18 coupled to the nacelle 16. The rotor 18 includes a rotatable hub 20 and at least one rotor blade 22 coupled to and extending outwardly from the hub 20. For example, in the illustrated embodiment, the rotor 18 includes three rotor blades 22. However, in an alternative embodiment, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy.

For instance, the hub 20 may be rotatably coupled to an electric generator (not shown) positioned within the nacelle 16 to permit electrical energy to be produced. The generators are sometimes, but not always, rotationally coupled to the rotor 18 through a gearbox. Thus, the gearbox is configured to step up the inherently low rotational speed of the rotor for the generator to efficiently convert the rotational mechanical energy to electric energy. Gearless direct drive wind turbines also exist. The generated electric power is transmitted to an electric grid via at least one electrical connection. Such known wind may be coupled to the electric grid via a known full power conversion assembly. More specifically, full power conversion assemblies may include a rectifier portion that converts alternating current (AC) generated by the generator to direct current (DC) and an inverter that converts the DC to AC of a predetermined frequency and voltage amplitude.

The wind turbine 10 may also include a wind turbine controller 26 centralized within the nacelle 16. However, in other embodiments, the controller 26 may be located within any other component of the wind turbine 10 or at a location outside the wind turbine. Further, the controller 26 may be communicatively coupled to any number of the components of the wind turbine 10 in order to control the operation of such components and/or to implement a control action. As such, the controller 26 may include a computer or other suitable processing unit. Thus, in several embodiments, the controller 26 may include suitable computer-readable instructions that, when implemented, configure the controller 26 to perform various different functions, such as receiving, transmitting and/or executing wind turbine control signals. Accordingly, the controller 26 may generally be configured to control the various operating modes of the wind turbine 10 (e.g., start-up or shut-down sequences), de-rate or up-rate the wind turbine 10, control various components of the wind turbine 10, and/or implement the various method steps as described herein.

For example, in certain embodiments, the methods described herein may be at least partially processor-implemented. The performance of certain of the operations may be distributed among the one or more processors, not only residing within a single machine, but deployed across a number of machines. The one or more processors may also operate to support performance of the relevant operations in a "cloud computer" environment or as a "software service" (SaaS). For example, at least some of the operations may be performed by a group of computers (as examples of machines including processors), these operations being accessible via a network (e.g., the Internet) and via one or more appropriate interfaces (e.g., Application Program Interfaces (APIs).)

In additional embodiments, the controller 26 may be configured to control the blade pitch or pitch angle of each of the rotor blades 22 (i.e., an angle that determines a perspective of the rotor blades 22 with respect to the direction of the wind) to control the power output generated by the wind turbine 10. For instance, the controller 26 may control the pitch angle of the rotor blades 22 by rotating the rotor blades 22 about a pitch axis 28, either individually or simultaneously, by transmitting suitable control signals to a pitch drive or pitch adjustment mechanism (not shown) of the wind turbine 10.

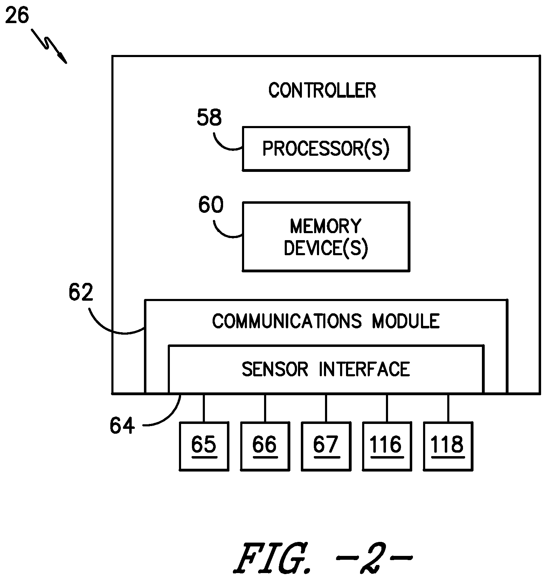

Referring now to FIG. 2, a block diagram of one embodiment of suitable components that may be included within the controller 26 (or farm controller 122) is illustrated in accordance with aspects of the present disclosure. The controller(s) 26, 122 may operate as a standalone device or may be coupled (e.g., networked) to other machines. In a networked deployment, the controller 26 may operate in the capacity of a server machine or a client machine in a server-client network environment, or as a peer machine in a peer-to-peer (or distributed) network environment. By way of non-limiting example, the controller 26 may include or correspond to a server computer, a client computer, a personal computer (PC), a tablet computer, a laptop computer, a netbook, a mobile device, or any machine capable of executing instructions, sequentially or otherwise, that specify actions to be taken by the controller 26.

As shown, the controller 26 may include one or more processor(s) 58 and associated memory device(s) 60 (and/or input/output (I/O) components, not shown) configured to perform a variety of computer-implemented functions (e.g., performing the methods, steps, calculations and the like disclosed herein). As used herein, the term "processor" refers not only to integrated circuits referred to in the art as being included in a computer, but also refers to a controller, a microcontroller, a microcomputer, a programmable logic controller (PLC), an application specific integrated circuit, application-specific processors, digital signal processors (DSPs), Application Specific Integrated Circuits (ASICs), Field Programmable Gate Arrays (FPGAs), and/or any other programmable circuits. Further, the memory device(s) 60 may generally include memory element(s) including, but are not limited to, computer readable medium (e.g., random access memory (RAM)), computer readable nonvolatile medium (e.g., a flash memory), one or more hard disk drives, a floppy disk, a compact disc-read only memory (CD-ROM), compact disk-read/write (CD-R/W) drives, a magneto-optical disk (MOD), a digital versatile disc (DVD), flash drives, optical drives, solid-state storage devices, and/or other suitable memory elements.

Additionally, the controller 26 may also include a communications module 62 to facilitate communications between the controller 26 and the various components of the wind turbine 10. For instance, the communications module 62 may include a sensor interface 64 (e.g., one or more analog-to-digital converters) to permit the signals transmitted by one or more sensors 65, 66, 67, 116, 118 to be converted into signals that can be understood and processed by the controller 26. Furthermore, it should be appreciated that the sensors 65, 66, 67, 116, 118 may be communicatively coupled to the communications module 62 using any suitable means. For example, as shown in FIG. 2, the sensors 65, 66, 67, 116, 118 are coupled to the sensor interface 64 via a wired connection. However, in alternative embodiments, the sensors 65, 66, 67, 116, 118 may be coupled to the sensor interface 64 via a wireless connection, such as by using any suitable wireless communications protocol known in the art. For example, the communications module 62 may include the Internet, a local area network (LAN), wireless local area networks (WLAN), wide area networks (WAN) such as Worldwide Interoperability for Microwave Access (WiMax) networks, satellite networks, cellular networks, sensor networks, ad hoc networks, and/or short-range networks. As such, the processor 58 may be configured to receive one or more signals from the sensors 65, 66, 67, 116, 118.

The various components of the controller 26, e.g. I/O components, may include a wide variety of components to receive input, provide output, produce output, transmit information, exchange information, capture measurements, and so on. The specific I/O components that are included in a particular machine will depend on the type of machine. For example, portable machines such as mobile phones will likely include a touch input device or other such input mechanisms, while a headless server machine will likely not include such a touch input device. Further, the I/O components may be grouped according to functionality merely for simplifying the following discussion and the grouping is in no way limiting. In further embodiments, the I/O components may include visual components (e.g., a display such as a plasma display panel (PDP), a light emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. In additional embodiments, the I/O components may include alphanumeric input components (e.g., a keyboard, a touch screen configured to receive alphanumeric input, a photooptical keyboard, or other alphanumeric input components), point based input components (e.g., a mouse, a touchpad, a trackball, a joystick, a motion sensor, or other pointing instrument), tactile input components (e.g., a physical button, a touch screen that provides location and/or force of touches or touch gestures, or other tactile input components), audio input components (e.g., a microphone), and the like.

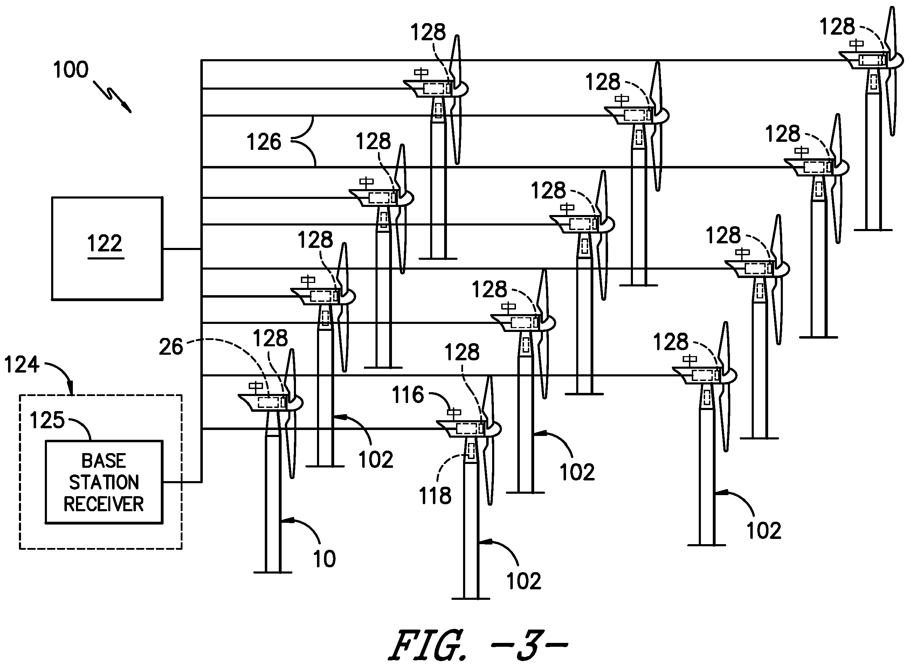

The sensors 65, 66, 67, 116, 118 may be any suitable sensors configured to measure any operating data points of the wind turbine 10 and/or wind parameters of the wind farm 100 (FIG. 3). For example, as shown in FIG. 3, in an embodiment, one or more of the sensors may be a position localization sensor, such as a real-time kinematic sensor or sensor system 124, locally installed onto one or more of the wind turbines 10 and/or integrated with the wind farm controller 122, one or more global positioning system (GPS) sensors, or combinations thereof.

As used herein, position localization sensor, and more particularly real-time kinematic (RTK) sensors, generally refer to sensors that use RTK positioning, which is a satellite navigation technique used to enhance the precision of position data derived from satellite-based positioning systems (global navigation satellite systems, GNSS). Thus, RTK position systems enable a refinement in satellite positioning which is categorized in the frequency range of about 1,164-1,610 Mhz, which is a different frequency ranges from other RF-based devices (such as cellular 3G, Bluetooth, UWB, etc.) that operate at higher frequencies.

The sensor system 124 of the present disclosure is configured to use measurements of the phase of the signal's carrier wave in addition to the information content of the signal and relies on a single reference station or interpolated virtual station to provide real-time corrections, providing up to centimeter-level accuracy. More specifically, the sensor system 124 uses a single base-station receiver 125 and a plurality of mobile units 128 (e.g. rover station(s)), with one of the mobile units 128 being associated with each of the wind turbines 102. As such, the base station 125 rebroadcasts the phase of the carrier that it observes, and the mobile units 128 compare their own phase measurements with the one received from the base station 125. The most popular way to transmit a correction signal from the base station 124 to one or more of the mobile stations 128 to achieve real-time, low-cost signal transmission is to use a radio modem (not shown). However, in certain embodiments, as shown in FIG. 3, rather than using the wireless RF modem, the present disclosure may also implement the communication between the base station 125 and the rover station(s) 128 using the existing network 126 of the wind farm 100.

In the present disclosure, for wind turbines, the measurement of positions are used as inputs to incorporate into a wind turbine model and/or algorithm to derive turbine-relevant parameters/variables (such as, model-based estimation) as described herein. Accordingly, the present disclosure encompasses a new system structure that eliminates the radio modems and additional processors of the RTK system, while also providing a more reliable and cost-effective solution. More specifically, in an embodiment, the system of the present disclosure may only need the GPS modules, with the position calculations and the subsequent estimations and controls being implemented in the existing wind turbine controllers.

For example, the sensors 65, 66, 67, 116, 118 may include blade sensors for measuring a pitch angle of one of the rotor blades 22 or for measuring a loading acting on one of the rotor blades 22; generator sensors for monitoring the generator (e.g. torque, rotational speed, acceleration and/or the power output); and/or various wind sensors for measuring various wind parameters (e.g. wind speed, wind direction, etc.). Further, the sensors 65, 66, 67, 116, 118 may be located near the ground of the wind turbine 10, on the nacelle 16, on a meteorological mast of the wind turbine 10, or any other location in the wind farm 100.

It should also be understood that any other number or type of sensors may be employed and at any location. For example, the sensors may be accelerometers, pressure sensors, strain gauges, angle of attack sensors, vibration sensors, MIMU sensors, camera systems, fiber optic systems, anemometers, wind vanes, Sonic Detection and Ranging (SODAR) sensors, infra lasers, Light Detecting and Ranging (LIDAR) sensors, radiometers, pitot tubes, rawinsondes, other optical sensors, and/or any other suitable sensors. It should be appreciated that, as used herein, the term "monitor" and variations thereof indicates that the various sensors of the wind turbine 10 may be configured to provide a direct measurement of the parameters being monitored or an indirect measurement of such parameters. Thus, the sensors 65, 66, 67, 116, 118 may, for example, be used to generate signals relating to the parameter being monitored, which can then be utilized by the controller 26 to determine the actual condition.

Certain embodiments are described herein as including logic or a number of components, modules, or mechanisms. Modules may constitute either software modules (e.g., code embodied on a machine-readable medium or in a transmission signal) or hardware modules. A hardware module is tangible unit capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may include dedicated circuitry or logic that is permanently configured (e.g., as a special-purpose processor, such as a field programmable gate array (FPGA) or an application specific integrated circuit (ASIC)) to perform certain operations. A hardware module may also include programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

At least some of the known wind turbines are physically positioned in a remote geographical region or in an area where physical access is difficult, such as, off-shore installations. These wind turbines may be physically nested together in a common geographical region to form a wind turbine farm and may be electrically coupled to a common AC collector system. For example, as shown in FIG. 3, one embodiment of a wind farm 100 that may be controlled according to the present disclosure is illustrated. More specifically, as shown, the wind farm 100 may include a plurality of wind turbines 102, including the wind turbine 10 described above communicatively coupled to a farm controller 122 via a network 126. For example, as shown in the illustrated embodiment, the wind farm 100 includes twelve wind turbines, including wind turbine 10. However, in other embodiments, the wind farm 100 may include any other number of wind turbines, such as less than twelve wind turbines or greater than twelve wind turbines. In one embodiment, the controller 26 of the wind turbine 10 may be communicatively coupled to the farm controller 122 through a wired connection, such as by connecting the controller 26 through suitable communicative links (e.g., a suitable cable). Alternatively, the controller 26 may be communicatively coupled to the farm controller 122 through a wireless connection, such as by using any suitable wireless communications protocol known in the art. In addition, the farm controller 122 may be generally configured similar to the controllers 26 for each of the individual wind turbines 102 within the wind farm 100.

In several embodiments, one or more of the wind turbines 102 in the wind farm 100 may include a plurality of sensors for monitoring various operating data points or control settings of the individual wind turbines 102 and/or one or more wind parameters of the wind farm 100. For example, as shown, each of the wind turbines 102 includes a wind sensor 116, such as an anemometer or any other suitable device, configured for measuring wind speeds or any other wind parameter. In one embodiment, the wind parameters may include information regarding at least one of or a combination of the following: a wind gust, a wind speed, a wind direction, a wind acceleration, a wind turbulence, a wind shear, a wind veer, a wake, SCADA information, or similar.

As is generally understood, wind speeds may vary significantly across a wind farm 100. Thus, the wind sensor(s) 116 may allow for the local wind speed at each wind turbine 102 to be monitored. In addition, the wind turbine 102 may also include one or more additional sensors 118. For instance, the sensors 118 may be configured to monitor electrical properties of the output of the generator of each wind turbine 102, such as current sensors, voltage sensors, temperature sensors, or power sensors that monitor power output directly based on current and voltage measurements. Alternatively, the sensors 118 may include any other sensors that may be utilized to monitor the power output of a wind turbine 102. It should also be understood that the wind turbines 102 in the wind farm 100 may include any other suitable sensor known in the art for measuring and/or monitoring wind parameters and/or wind turbine operating data points.

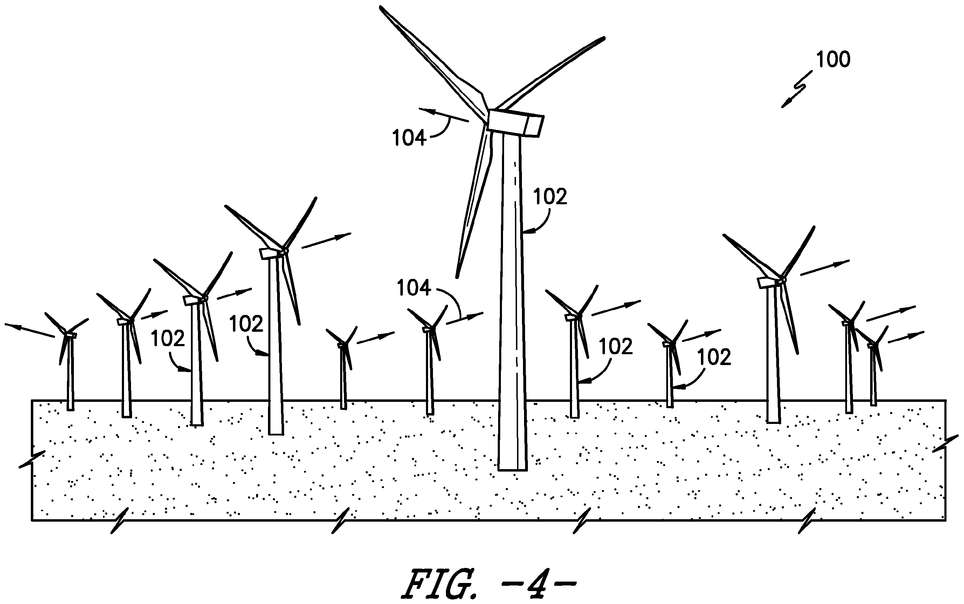

Referring now to FIG. 4, another schematic diagram of a wind farm 100 is illustrated in accordance with the present disclosure. As shown, the wind farm 100 includes a plurality of offshore wind turbines 102. Moreover, as shown, each of the wind turbines 102 is positioned at an angle with respect to true north, as indicated via the arrows 104.

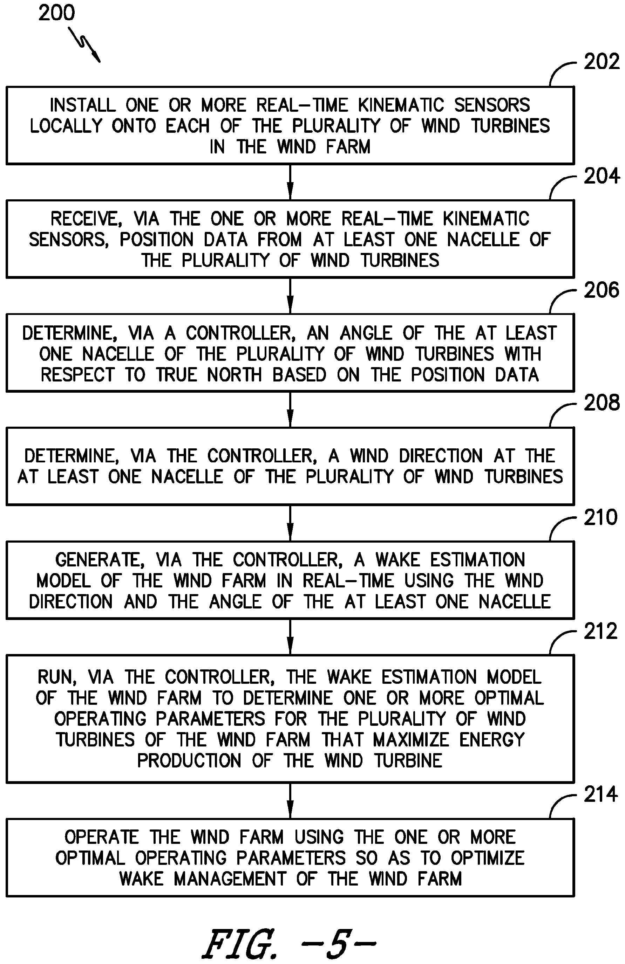

Referring now to FIG. 5, a flow diagram of one embodiment of a method 200 for optimizing wake management in a wind farm having a plurality of wind turbines is illustrated. In general, the method 200 is described herein with reference to the wind farm 100, the wind turbine(s) 10, 102, and the controllers 26, 122 of FIGS. 1-4. However, it should be appreciated that the disclosed method 200 may be implemented with wind turbines having any other suitable configurations. In addition, although FIG. 5 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown at (202), the method 200 includes installing the one or more position localization sensors (such as any of sensors 65, 66, 67, 116, 118) locally onto each of the plurality of wind turbines in the wind farm 100. Thus, as shown at (204), the method 200 may include receiving, via one or more of the position localization sensors, position data from at least one nacelle (such as nacelle 16) of the plurality of wind turbines 102. More specifically, the position data may be two-dimensional or three-dimensional position data from one or more RTK sensors and/or one or more GPS sensors as well as two-dimensional or three-dimensional acceleration data from one or more INS sensors. Accordingly, in such embodiments, when one or more of the INS sensors fault, the method 100 may include disabling receiving of the acceleration data from the one or more INS sensors. In addition, when the one or more INS sensors faults, the method 100 may include maintaining operation of at least one Kalman filter communicatively coupled with the model to output one or more acceleration signals to enable fault intolerant control of tower damping of one or more of the plurality of wind turbines 102.

Referring still to FIG. 5, as shown at (206), the method 200 also includes determining, via a controller (such as farm-level controller 122), an angle of one or more nacelles (or all of the nacelles) of the plurality of wind turbines 102 with respect to true north based on the position data. Thus, as shown at (208), the method 200 includes determining, via the controller, a wind direction at the nacelle(s) of the plurality of wind turbines 102. For example, in an embodiment, the farm-level controller 122 may receive one or more measurement signals from a wind sensor (such as sensors 116) of the nacelle(s) and calculate the wind direction at the nacelle(s) using the one or more measurement signals. In such embodiments, as an example and as shown in FIG. 3, the wind sensor 116 may be an anemometer mounted to the nacelle(s).

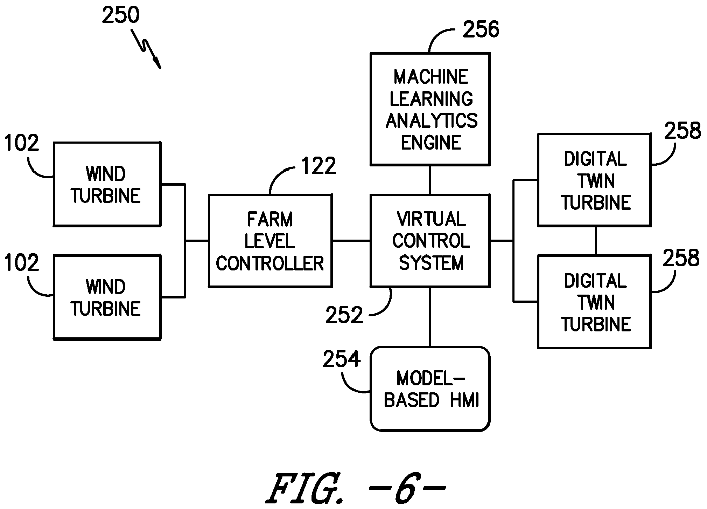

As shown at (210), the method 200 also includes generating, via the farm-level controller 122, a wake estimation model of the wind farm 100 in real-time using the wind direction and the angle(s) of the nacelle(s). For example, in particular embodiments, the wake estimation model of the wind farm 100 may be a digital twin 250 of the wind farm 100. More specifically, as shown in FIG. 6, a schematic diagram of one embodiment of the digital twin 250 of the wind farm 100 is illustrated. As shown, the digital wind farm 250 encompasses one or more intelligent wind turbines 252 configured to generate power, the associated Supervisory Control and Data Acquisition (SCADA) system 253, industrial gateway controls (e.g. a centralized method of communicating with the site), and the digital infrastructure in the cloud. Thus, as shown in the illustrated embodiment, the digital wind farm 250 is configured to provide an overall systems-level view of an end-to-end ecosystem of all associated components within the wind farm 100. As such, each of the system components may have a dedicated responsibility and certain responsibilities as part of the ecosystem.

More specifically, as shown in FIG. 6, a block diagram of one embodiment of a digital wind farm 250 according to the present disclosure is illustrated. More specifically, as shown, the diagram depicts a digital twin interface for managing wind farms that can, for example, be used to enhance (ideally optimize) performance of a plurality of wind turbines 102 of a wind farm 100. Thus, the system of FIG. 6 may increase customer satisfaction and value by simplifying the process of real-time optimization of a wind farm 100, and supporting ongoing operations, maintenance and growth of the wind farm 100.

More specifically, as shown in FIG. 6, the digital wind farm 250 includes a plurality of wind turbines 102, the farm-level controller 122, a virtual control system 252, a machine-learning analytics engine 256, a model-based human-machine interface (HMI) 254, and a plurality of digital twin turbines 258. In an example embodiment, the digital wind farm 250 assumes a set of turbines with SCADA or equivalent elements, associated with the digital wind farm 250. Such a digital wind farm 250 may also include sensor inputs from throughout the wind farm 100 as well. The digital wind farm 250 in turn may be associated with the virtual control system that has a digital twin view of the wind farm 100.

In an example embodiment, the digital twin turbines 258 are representations of the physical assets that include the physics-based models for the specific models of each asset, the unique operating characteristics and/or data that have been accumulated for each asset, current settings, and/or other information. Further, the virtual control system 252 may include a systems model of how the integrated system of assets are likely to operate, and how changing the characteristics of a subset of the assets is likely to affect the other assets as well as farm performance in general. In certain embodiments, the virtual control system 252 may use or incorporate externally available data about weather patterns and other conditions to combine with the data coming from sensors and from the physical assets.

The model-based HMI 254 may provide one or more views of the virtual, digital twin farm and the relevant states of the assets and system performance, a virtual HMI, and so on. Virtual controls accessed through the model-based HMI 254 may be translated by the virtual control system and supporting analytics, as applied to the digital twin assets into a specific set of commands that would be executed by the physical farm control system and turbines across the farm 100. Accordingly, in an example embodiment, directions provided by an operator can be modeled before executing them on the physical equipment in order to find the right combination of physical control settings needed to achieve the operator's goals.

Accordingly, referring back to FIG. 5, as shown at (212), the method 200 includes running, via the farm-level controller 122, the wake estimation model (e.g. the digital twin model) of the wind farm 100 to determine one or more optimal operating parameters for the plurality of wind turbines 102 of the wind farm 100 that maximize energy production of the wind farm 100. For example, in an embodiment, the optimal operating parameter(s) may include one or more yaw angles for one or more of the plurality of wind turbines 102. In yet another embodiment, the method 200 may include running the wake estimation model of the wind farm 100 online.

As shown at (212), the method 200 includes operating the wind farm 100 using the one or more optimal operating parameters so as to optimize wake management of the wind farm 100. For example, in an embodiment, the farm-level controller 122 is configured to operate the wind farm 100 by adjusting, e.g. via one or more turbine controllers, the one or more yaw angles for one or more of the plurality of wind turbines 102 so as to maximize energy production of the wind farm 100.

Although the embodiments of the present invention have been described with reference to specific example embodiments, it will be evident that various modifications and changes may be made to these embodiments without departing from the broader scope of the inventive subject matter. Accordingly, the specification and drawings are to be regarded in an illustrative rather than a restrictive sense. The accompanying drawings that form a part hereof show by way of illustration, and not of limitation, specific embodiments in which the subject matter may be practiced. The embodiments illustrated are described in sufficient detail to enable those skilled in the art to practice the teachings disclosed herein. Other embodiments may be used and derived therefrom, such that structural and logical substitutions and changes may be made without departing from the scope of this disclosure.

Various aspects and embodiments of the present invention are defined by the following numbered clauses:
Clause 1. A method for optimizing wake management in a wind farm having a plurality of wind turbines, the method comprising:
   receiving, via one or more position localization sensors, position data from at least one nacelle of the plurality of wind turbines;
   determining, via a farm-level controller, an angle of the at least one nacelle of the plurality of wind turbines with respect to true north based on the position data;
   determining, via the controller, a wind direction at the at least one nacelle of the plurality of wind turbines;
   generating, via the farm-level controller, a wake estimation model of the wind farm in real-time using the wind direction and the angle of the at least one nacelle;
   running, via the farm-level controller, the wake estimation model of the wind farm to determine one or more optimal operating parameters for the plurality of wind turbines of the wind farm that maximize energy production of the wind turbine; and,
   operating the wind farm using the one or more optimal operating parameters so as to optimize wake management of the wind farm.
Clause 2. The method of clause 1, wherein the one or more position localization sensors comprise one or more of the following: one or more real-time kinematic (RTK) sensors, one or more inertial navigation system (INS) sensors, one or more global positioning system (GPS) sensors, or combinations thereof.
Clause 3. The method of clause 2, wherein receiving, via the one or more position localization sensors, position data from at least one nacelle of the plurality of wind turbines further comprises:
   receiving position data from the one or more RTK sensors or the one or more GPS sensors; and,
   receiving acceleration data from the one or more INS sensors.
Clause 4. The method of clause 3, wherein, when the one or more INS sensors faults, disabling receiving of the acceleration data from the one or more INS sensors.
Clause 5. The method of clause 4, wherein, when the one or more INS sensors faults, maintaining operation of at least one Kalman filter to output one or more acceleration signals to enable fault intolerant control of tower damping of one or more of the plurality of wind turbines.
Clause 6. The method of any of the preceding clauses, further comprising installing the one or more position localization sensors locally onto each of the plurality of wind turbines in the wind farm, wherein the one or more position localization sensors communicate with the farm-level controller and/or a base station directly using an existing network of the wind farm or a wireless communication system.
Clause 7. The method of any of the preceding clauses, wherein determining the angle of the at least one nacelle of the plurality of wind turbines with respect to true north based on the position data further comprises determining an angle of each nacelle of each wind turbine in the plurality of wind turbines with respect to true north based on the position data.
Clause 8. The method of any of the preceding clauses, wherein determining the wind direction at the at least one nacelle of the plurality of wind turbines further comprises:
   receiving one or more measurement signals from a wind sensor of the at least one nacelle; and,
   calculating the wind direction at the at least one nacelle using the one or more measurement signals.
Clause 9. The method of any of the preceding clauses, wherein the one or more optimal operating parameters comprise one or more yaw angles for one or more of the plurality of wind turbines.
Clause 10. The method of clause 7, wherein operating the wind farm using the one or more optimal operating parameters further comprises adjusting, via one or more turbine controllers, the one or more yaw angles for one or more of the plurality of wind turbines.
Clause 11. The method of any of the preceding clauses, wherein the wake estimation model of the wind farm further comprises digital twin of the wind farm.
Clause 12. The method of any of the preceding clauses, further comprising running the wake estimation model of the wind farm online.
Clause 13. A system for optimizing wake management in a wind farm having a plurality of wind turbines, the system comprising:
   one or more position localization sensors for generating position data from at least one nacelle of the plurality of wind turbines; and,
   a controller communicatively coupled to the one or more position localization sensors, the controller configured to perform a plurality of operations, the plurality of operations comprising:
      determining an angle of the at least one nacelle of the plurality of wind turbines with respect to true north based on the position data;
      determining a wind direction at the at least one nacelle of the plurality of wind turbines;
      generating a wake estimation model of the wind farm in real-time using the wind direction and the angle of the at least one nacelle with respect to true north;
      running the wake estimation model of the wind farm to determine one or more optimal operating parameters for the plurality of wind turbines of the wind farm that maximize energy production of the wind turbine; and,
      operating the wind farm using the one or more optimal operating parameters so as to optimize wake management of the wind farm.
Clause 14. The system of clause 13, wherein the one or more position localization sensors are installed locally onto each of the plurality of wind turbines in the wind farm.
Clause 15. The system of any of clauses 13-14, wherein determining the angle of the at least one nacelle of the plurality of wind turbines with respect to true north based on the position data further comprises determining an angle of each nacelle of each wind turbine in the plurality of wind turbines with respect to true north based on the position data.
Clause 16. The system of any of clauses 13-15, wherein determining the wind direction at the at least one nacelle of the plurality of wind turbines further comprises:
   receiving one or more measurement signals from a wind sensor of the at least one nacelle; and,
   calculating the wind direction at the at least one nacelle using the one or more measurement signals.
Clause 17. The system of clause 16, wherein the wind sensor comprises an anemometer mounted to the at least one nacelle or a met mast.
Clause 18. The system of any of clauses 13-17, wherein the one or more optimal operating parameters comprise one or more yaw angles for one or more of the plurality of wind turbines.
Clause 19. The system of any of clauses 13-18, wherein the wake estimation model of the wind farm further comprises digital twin of the wind farm.
Clause 20. A wind farm, comprising:
   a plurality of wind turbines, each wind turbine of the plurality of wind turbines comprising a turbine-level controller, a tower, a nacelle mounted atop the tower, a rotor having rotatable hub with at least one rotor blade mounted thereto, and one or more position localization sensors for generating position data relating to the nacelle;
   a farm-level controller communicatively coupled to each of the turbine-level controllers, the farm-level controller configured to perform a plurality of operations, the plurality of operations comprising:
      determining an angle of each of the nacelles of each wind turbine of the plurality of wind turbines with respect to true north based on the position data;
      determining a wind direction at each of the nacelles of each wind turbine of the plurality of wind turbines;
      generating a wake estimation model of the wind farm in real-time using the wind directions and the angles of the nacelles of each wind turbine of the plurality of wind turbines with respect to true north;
      running the wake estimation model of the wind farm to determine one or more optimal operating parameters for the plurality of wind turbines of the wind farm that maximize energy production of the wind turbine; and,
      operating the wind farm using the one or more optimal operating parameters so as to optimize wake management of the wind farm.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for optimizing wake management in a wind farm having a plurality of wind turbines, the method comprising:
receiving, via one or more position localization sensors, position data from at least one nacelle of the plurality of wind turbines;
determining, via a farm-level controller, an angle of the at least one nacelle of the plurality of wind turbines with respect to true north based on the position data;
determining, via the controller, a wind direction at the at least one nacelle of the plurality of wind turbines;
generating, via the farm-level controller, a wake estimation model of the wind farm in real-time using the wind direction and the angle of the at least one nacelle;
running, via the farm-level controller, the wake estimation model of the wind farm to determine one or more optimal operating parameters for the plurality of wind turbines of the wind farm that maximize energy production of the wind turbine; and,
operating the wind farm using the one or more optimal operating parameters so as to optimize wake management of the wind farm.

2. The method of claim 1, wherein the one or more position localization sensors comprise one or more of the following: one or more real-time kinematic (RTK) sensors, one or more inertial navigation system (INS) sensors, one or more global positioning system (GPS) sensors, or combinations thereof.

3. The method of claim 2, wherein receiving, via the one or more position localization sensors, position data from at least one nacelle of the plurality of wind turbines further comprises:
receiving position data from the one or more RTK sensors or the one or more GPS sensors; and,
receiving acceleration data from the one or more INS sensors.

4. The method of claim 3, wherein, when the one or more INS sensors faults, disabling receiving of the acceleration data from the one or more INS sensors.

5. The method of claim 4, wherein, when the one or more INS sensors faults, maintaining operation of at least one Kalman filter to output one or more acceleration signals to enable fault intolerant control of tower damping of one or more of the plurality of wind turbines.

6. The method of any of the preceding claims, further comprising installing the one or more position localization sensors locally onto each of the plurality of wind turbines in the wind farm, wherein the one or more position localization sensors communicate with the farm-level controller and/or a base station directly using an existing network of the wind farm or a wireless communication system.

7. The method of the preceding claims, wherein determining the angle of the at least one nacelle of the plurality of wind turbines with respect to true north based on the position data further comprises determining an angle of each nacelle of each wind turbine in the plurality of wind turbines with respect to true north based on the position data.

8. The method of the preceding claims, wherein determining the wind direction at the at least one nacelle of the plurality of wind turbines further comprises:
receiving one or more measurement signals from a wind sensor of the at least one nacelle; and,
calculating the wind direction at the at least one nacelle using the one or more measurement signals.

9. The method of the preceding claims, wherein the one or more optimal operating parameters comprise one or more yaw angles for one or more of the plurality of wind turbines.

10. The method of any of the preceding claims, wherein operating the wind farm using the one or more optimal operating parameters further comprises adjusting, via one or more turbine controllers, the one or more yaw angles for one or more of the plurality of wind turbines.

11. The method of the preceding claims, wherein the wake estimation model of the wind farm further comprises digital twin of the wind farm.

12. The method of the preceding claims, further comprising running the wake estimation model of the wind farm online.

13. A system for optimizing wake management in a wind farm having a plurality of wind turbines, the system comprising:
one or more position localization sensors for generating position data from at least one nacelle of the plurality of wind turbines; and,
a controller communicatively coupled to the one or more position localization sensors, the controller configured to perform a plurality of operations, the plurality of operations comprising:
determining an angle of the at least one nacelle of the plurality of wind turbines with respect to true north based on the position data;
determining a wind direction at the at least one nacelle of the plurality of wind turbines;
generating a wake estimation model of the wind farm in real-time using the wind direction and the angle of the at least one nacelle with respect to true north;
running the wake estimation model of the wind farm to determine one or more optimal operating parameters for the plurality of wind turbines of the wind farm that maximize energy production of the wind turbine; and,
operating the wind farm using the one or more optimal operating parameters so as to optimize wake management of the wind farm.

14. The system of claim 13, wherein the one or more position localization sensors are installed locally onto each of the plurality of wind turbines in the wind farm.

15. The system of claims 13-14, wherein determining the angle of the at least one nacelle of the plurality of wind turbines with respect to true north based on the position data further comprises determining an angle of each nacelle of each wind turbine in the plurality of wind turbines with respect to true north based on the position data.
